# EUROPÄISCHE PATENTSCHRIFT

(11) **EP 1 167 314 B1**
(45) Veröffentlichungstag und Bekanntmachung des Hinweises auf die Patenterteilung: **04.08.2004**
(21) Anmeldenummer: 01114568.7
(22) Anmeldetag: 18.06.2001
(51) Int. Cl.: C04B 7/43, F27B 7/20

(54) **Anlage zur thermischen Behandlung von mehlförmigen Rohmaterialien**
Device for the thermal treatment of raw meal
Dispositif pour le traitement thermique de farine crue

(30) Priorität: 21.06.2000 DE 10030613
(43) Veröffentlichungstag der Anmeldung: 02.01.2002
(73) Patentinhaber: KHD Humboldt Wedag AG, 51105 Köln (DE)
(72) Erfinder: Eckert, Carsten, 51061 Köln (DE); Filges, Ralf, 51427 Bergisch Gladbach (DE); Schilling, Horst, 50969 Köln (DE); Streit, Norbert, 53721 Siegburg (DE)

(56) Entgegenhaltungen:
- US-A- 4 492 566
- US-A- 4 530 661
- US-A- 4 861 265

## Beschreibung

Die Erfindung betrifft eine Anlage zur thermischen Behandlung von mehlförmigen Rohmaterialien, insbesondere bei der Herstellung von Zementklinker aus Rohmehl, mit Rohmehlvorwärmer, Vorcalcinationsstufe, Drehrohrofen und Klinkerkühler, nach dem Oberbegriff des Anspruchs 1.

Um bei Anlagen zur Herstellung von Zementklinker aus Zementrohmehl unwirtschaftlich lange und/oder im Durchmesser große Drehrohröfen zu vermeiden und den spezifischen Wärmebedarf des Zementklinkerherstellungsprozesses niedrig zu halten, ist es bekannt, dem Drehrohrofen materialflussseitig gesehen eine Vorcalcinationsstufe vorzuschalten, die mit wenigstens einer Zweitfeuerung (neben der Feuerung im Drehrohrofen) ausgestattet ist. Bekannt ist eine Vorcalcinationsstufe, bei der die mit Brennstoff und vorerhitztem Rohmehl versorgte Drehofenabgassteigleitung bzw. die darin geführte Gas-Feststoff-Suspension um 90° (US-A-4,080,218) oder um 180° (EP-B-0 222 044) umgelenkt und in den untersten Zyklon des Zyklonschwebegas-Vorwärmersystems zwecks Abtrennung des vorcalcinierten Rohmehls vom Gasstrom eingeführt wird. Neben der Forderung einer möglichst hochgradigen Vorcalcinierung des Zementrohmehls vor Einführung in den Drehrohrofen werden die Erbauer und Betreiber von Zementklinkerproduktionslinien gleichzeitig mit immer schärferen Forderungen nach niedrigen Emissionswerten bei Schadstoffen wie NOₓ und CO konfrontiert.

Bei den bekannten Vorcalcinationsstufen wird das Drehofenabgas vor Einführung in den untersten Zyklon des Zyklonschwebegaswärmetauschers mit wenigstens einem Teilstrom der vom Klinkerkühler kommenden Tertiärluft zusammengefasst. Vor dieser Zusammenfassung wird der in die Drehofenabgassteigleitung eingeführte Brennstoff unterstöchiometrisch, d. h. mit Sauerstoffunterschuss verbrannt zwecks Schaffung einer CO-haltigen Reduktionszone bzw. CO-Gassträhne zur Reduktion des Schadstoffes NOₓ, der insbesondere durch Hochtemperaturverbrennung im Drehrohrofen gebildet worden ist (thermisches NOₓ), während der in den benachbarten Tertiärluftkanal eingeführte Brennstoff überstöchiometrisch, d. h. mit Sauerstoffüberschuss verbrannt wird (EP-B-0 222 044). Das in der NOₓ-Reduktionszone des Drehofenabgaskanals nicht verbrauchte CO sowie in der Vorcalcinationsstufe ggf. zunächst nicht verbrannte Festbrennstoffpartikel werden dann suspensionsströmungsabwärts gesehen mittels überschüssigen Sauerstoffs aus dem Tertiärluftkanal nachverbrannt, wobei dieser Restausbrand durch die schwanenhalsförmige 180°-Strömungsumlenkung der Suspension in der Vorcalcinationsstufe begünstigt wird.

Bei den bekannten Vorcalcinationsstufen hängt die Wirksamkeit der im Drehofenabgaskanal gebildeten CO-haltigen Reduktionszone vom O₂-Gehalt des Drehofenabgases im Verhältnis zur Menge des über die wenigstens eine DeNOₓ-Brennstelle eingeführten Brennstoffs ab. Es versteht sich, dass dieses Verhältnis nicht zielsicher durch Regeleingriff auf das Saugzuggebläse eingestellt werden kann, das abgasströmungsmäßig gesehen dem Zyklonschwebegaswärmetauschersystem nachgeschaltet ist, weil dieses Saugzuggebläse abgesehen vom Drehofenabgas gleichzeitig auch die Tertiärluft ansaugt und abzieht. Dieses Verhältnis kann auch nicht dadurch genau geregelt werden, dass in der Vorcalcinationsstufe in die Tertiärluftleitung vor deren Einmündung in den Drehofenabgaskanal eine Luftklappe eingebaut werden würde (DE-A-35 22 272 Fig. 1).

Es ist auch schon vorgeschlagen worden (z. B. DE-A-197 32 778 Fig. 6), bei einer Zementklinkerproduktionslinie in die Drehofenabgassteigleitung unterhalb der Rohmehleinführung einen Prallschieber einzubauen, der infolge seiner hohen mechanisch/thermisch-chemischen Belastung eiern hohen Verschleiß ausgesetzt ist und daher als plattenförmiger kühlmediumdurchströmter Hohlkörper ausgebildet ist. Durch seine Kühlung ist die Standzeit des bekannten Prallschiebers zwar verlängert; jedoch würde er eingebaut in die CO-haltige Reduktionszone bzw. in die CO-haltige Gassträhne eines mit DeNOₓ-Brennstelle ausgestatteten Drehofenabgaskanals durch Wirbelbildung Turbulenzen in den laminaren Charakter der Gas-Feststoff-Suspension bringen und damit die Länge der CO-haltigen Reduktionszone, der damit verbundenen Verweilzeiten sowie letztendlich die Wirksamkeit der NOₓ-Zersetzungsreaktion in unerwünschter Weise verkürzen bzw. schmälern.

Der Erfindung liegt die Aufgabe zugrunde, bei Anlagen zur Zementklinkerherstellung der oben beschriebenen Art mit einer dem Drehofen vorgeschalteten Vorcalcinationsstufe, bei der eine CO-haltige Reduktionszone im Drehofenabgaskanal zwecks Reduktion des Schadstoffes NOₓ zum Einsatz kommt, dafür zu sorgen, dass das Mengenverhältnis von O₂ im Drehofenabgas zu dem über DeNOₓ-Brennstelle eingeführten Brennstoff und damit die Wirksamkeit der NOₓ-Reduktion gezielt zu regeln ist.

Diese Aufgabe wird erfindungsgemäß mit einer Anlage mit den Merkmalen des Anspruchs 1 gelöst. Vorteilhafte Ausgestaltungen der Erfindung sind in den Unteransprüchen angegeben.

Bei der erfindungsgemäßen Zementklinker-Produktionslinie mit der Vorcalcinationsstufe, die wenigstens eine DeNOₓ-Brennstelle mit unterstöchiometrischer Brennstoffverbrennung im Drehofenabgaskanal aufweist, wird auf die Wirksamkeit der CO-haltigen Reduktionszone zwecks NOₓ-Minderung im Drehofenabgas nicht dadurch nur indirekt Einfluss genommen, dass Luftklappen verstellt werden, die in vom Klinkerkühler kommende Tertiärluftleitungen vor deren Einmündung in den Drehofenabgaskanal eingebaut sein können, und/oder dass das Saugzuggebläse verstellt wird, welches gleichzeitig das Drehofenabgas und die Tertiärluft ansaugt, sondern erfindungsgemäß wird das Verhältnis Brennstoff zu Sauerstoff an der DeNOₓ-Brennstelle und damit die Wirksamkeit der CO-haltigen Reduktionszone dadurch direkt geregelt, dass im Drehofenabgaskanal oberhalb der DeNOₓ-Brennstelle und oberhalb des Rohmehleintrages, aber vor bzw. unterhalb der Einmündung eines Tertiärluftstromes eine Drosselklappe eingebaut ist, welche die Drehofenabgasmenge und damit den O₂-Gehalt im Ofenabgas und damit den CO-Gehalt in der CO-haltigen Reduktionszone unmittelbar regelt.

Dabei wird die im Drehofenabgaskanal eingebaute Drosselklappe bei steigendem O₂-Gehalt im Drehofenabgas in eine den Drehofenabgasstrom stärker drosselnde Schwenkstellunge gebracht, und umgekehrt. Beim Drosseln des Drehofenabgases sinkt dessen O₂-Gehalt und es steigt bei unveränderter DeNOₓ-Brennstoffmenge der CO-Gehalt in der CO-haltigen Reduktionszone, und umgekehrt. Dabei kann der zweckmäßiger Weise in der Drehofeneinlaufkammer gemessene O₂-Gehalt im Drehofenabgas in einem Bereich von etwa 1,0 bis 3,0 % liegen, und der CO-Gehalt in der CO-haltigen Reduktionszone und damit deren Wirksamkeit kann vergleichsweise zielsicher geregelt werden.

Die im Drehofenabgaskanal eingebaute Drosselklappe liegt mit ihrem Schwenkbereich in Abgasströmungsrichtung, d. h. das Drosselklappengelenk ist an der vom Abgas angeströmten Klappenunterseite angeordnet. Innerhalb ihres Schwenkbereichs steht die Drosselklappe also senkrecht bis schräg nach oben. Dadurch bleiben bei allen Schwenkstellungen der Drosselklappe die laminare Charakteristik der Drehofenabgasströmung und die Länge der CO-haltigen Reduktionszone bzw. CO-haltigen Abgassträhne und damit auch die Verweilzeit der Reaktionspartner in dieser CO-haltigen Wolke möglichst lange erhalten. Außerdem kommt es nicht zu störenden Materialansatzbildungen aufgrund von Strömungsabrissen an der Drosselklappe.

Die Standzeit der Drosselklappe im Drehofenabgas, das nach Einführung des zu calcinierenden Rohmehls noch eine Temperatur von ca. 800 bis 900° C aufweisen kann, wird noch erhöht, wenn nach einem weiteren Merkmal der Erfindung die Drosselklappe als plattenförmiger Hohlkörper ausgebildet ist, der von einem Kühlmedium wie Kühlluft, Kühlwasser etc. durchströmt ist.

Die Erfindung und deren weitere Merkmale und Vorteile werden anhand der in Figuren schematisch dargestellten Ausführungsbeispiele näher erläutert.

Es zeigt:
- Fig. 1:: in schematischer Darstellung die Vorcalcinationsstufe einer Anlage zur Herstellung von Zementklinker mit reduzierter NOₓ-Emission, und
- Fig. 2:: in vergrößerter Darstellung herausgezeichnet die Einzelheit II der Figur 1.

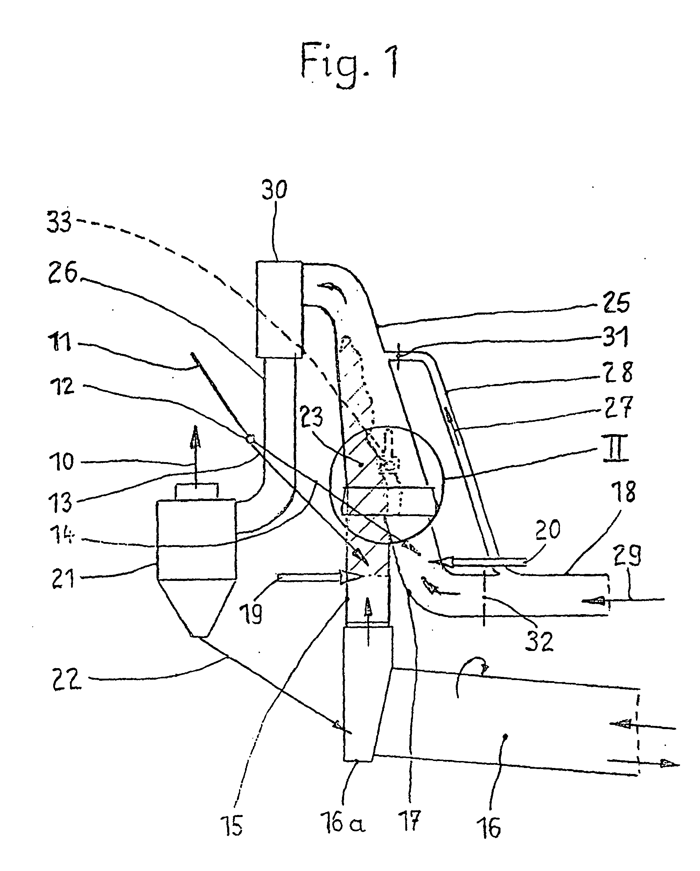

Bei der in Figur 1 ausschnittsweise gezeigten Zementklinkerproduktionslinie wird das Zementrohmehl oben einem nicht dargestellten Zyklonschwebegas-Vorwärmersystem aufgegeben, wo es nacheinander mehrere Zyklonschwebegas-Wärmetauscher im kombinierten Gleich-/Gegenstrom zum heißen Abgas 10 der Vorcalcinierstufe durchwandert, um im vorletzten (zweituntersten) Zyklon aus dem Gasstrom 10 ausgeschieden und durch die Zuführleitung 11 in der Rohmehlweiche 12 auf die beiden Gutzuführungsleitungen 13 und 14 aufgeteilt zu werden. Das am Zementrohmehl abgekühlte Abgas 10 wird nach Durchströmung des obersten Zyklons der Vorwärmstufe der Zementklinkerproduktionslinie von einem ebenfalls nicht dargestellten Saugzuggebläse abgesaugt.

Während die Rohmehlleitung 13 in den Drehofenabgaskanal 15, d. h. in die Abgassteigleitung des Drehrohrofens 16 einmündet, mündet die Rohmehlleitung 14 in einen Tertiärluftkanal 17 ein, der mittels der Tertiärluftleitung 18, die vom nicht dargestellten dem Drehrohrofen 16 nachgeschalteten Klinkerkühler kommt, mit Tertiärluft aus dem Klinkerkühler versorgt wird. Etwas unterhalb der Einführung des Rohmehls 13 wird in den Drehofenabgaskanal 15 Brennstoff 19 an wenigstens einer sogenannten DeNOₓ-Brennstelle eingeführt, und in den Tertiärluftkanal 17 kann etwa im Bereich der Einführung des Rohmehlteilstroms 14 ebenfalls Brennstoff 20 eingeführt werden. Das in der Vorcalcinationsstufe calcinierte (entsäuerte) Zementrohmehl wird im untersten Zyklon 21 vom heißen Abgasstrom 10 abgetrennt und als hochgradig (z. B. 95 %) calciniertes Zementrohmehl 22 in die Einlaufkammer des Drehrohrofens eingeführt, in dessen Sinterzone es zu Zementklinker gebrannt wird.

Der in den Drehofenabgaskanal 15 eingeführte Brennstoff 19 wird vermittels des im Drehofenabgas beim Verlassen des Drehrohrofens und zweckmäßiger Weise in der Drehofeneinlaufkammer zu messenden O₂-Gehalts des Ofenabgases und ggf. vermittels zusätzlicher Verbrennungsluft unterstöchiometrisch, d. h. mit Sauerstoffunterschuss verbrannt zwecks Bildung einer CO-haltigen Reduktionszone in Gestalt einer sich von der Brennstelle 19 nach oben anschließenden CO-haltigen Gassträhne bzw. CO-haltigen Wolke 23, die in Fig. 1 durch Rechtsschraffur schematisch angedeutet ist. In dieser CO-haltigen Reduktionszone 23 wird das im wesentlichen von der Drehofenfeuerung kommende NOₓ reduziert, d. h. durch Zersetzung unschädlich gemacht, so dass die NOₓ-Emission des Abgases 10 der Vorcalcinationsstufe minimiert ist. Dagegen kann der in den Tertiärluftkanal 17 eingeführte Brennstoff 20 überstöchiometrisch, d. h. mit Sauerstoffüberschuss verbrannt werden. Der Restausbrand des in der Reduktionszone 23 zunächst überschüssig gebliebenen CO und der ggf. unverbrannt gebliebenen Kohlenwasserstoffe erfolgt durch Sauerstoff aus überschüssiger über den Tertiärluftkanal 17 herangeführter Tertiärluft sowie ggf. an einer in der Vorcalcinationsstufe höher gelegenen Stelle durch weitere Tertiärluft, die über eine Tertiärluftzweigleitung 28 herangeführt und in die Vorcalcinationsstufe eingeführt wird. Zwecks intensiver Vermischung der Reaktionspartner zur Förderung des Restausbrandes kann im Bereich der Strömungsumlenkung der schwanenhalsförmigen Vorcalcinationsstufe vom aufsteigenden Rohrleitungsast 25 um etwa 180° in den absteigenden Rohrleitungsast 26 noch eine Wirbelkammer bzw. Mischkammer 30 angeordnet sein.

Zur Steuerung der Aufteilung der Tertiärluft 29 auf den Tertiärluftkanal 17 sowie auf die Abzweigleitung 28 im gewünschten Verhältnis können noch in der Leitung 17 bzw. in der Abzweigleitung 28 Stellglieder wie Klappen 32 bzw. 31 angeordnet sein.

Wie aus den Figuren hervorgeht, ist im Drehofenabgaskanal 15 oberhalb der wenigstens einen DeNOₓ-Brennstelle 19 und oberhalb des Eintrages des Rohmehles 13 vor Einmündung der Tertiärluftleitung 17 z. B. etwa im Zwickelbereich zwischen Drehofenabgaskanal 15 und Tertiärluftkanal 17 eine schwenkbare Drosselklappe 33 eingebaut, die durch eine mehr oder weniger starke Einschnürung der Drehofenabgasströmung die Drehofenabgasmenge und damit den O₂-Gehalt im Ofenabgas regelt, in dem Sinne, dass bei abnehmendem O₂-Gehalt im Drehofenabgas (stärker drosselnde Stellung der Drosselklappe 33) der CO-Gehalt in der Reduktionszone 23 und damit die Wirksamkeit der DeNOₓ-Reaktion erhöht wird, und umgekehrt. Die Schwenkstellung der Drosselklappe 33 wird dabei in Abhängigkeit vom im Drehofenabgas enthaltenen O₂-Gehalt eingestellt, der am zweckmäßigsten in der Einlaufkammer 16a des Drehofens 16 gemessen wird. So können die gemessenen Analysenwerte von O₂ im Drehofenabgas in einem Bereich von etwa 1,0 bis 3,0 % liegen. Zusätzlich zur oder anstelle der Messgröße O₂-Gehalt im Ofenabgas kann zwecks Regelung der Schwenkstellung der Drosselklappe 33 auch noch der gemessene Gehalt an CO (in der Ofeneinlaufkammer z. B. 0,03 bis 1,8%) und/oder an NOₓ im Abgas herangezogen werden.

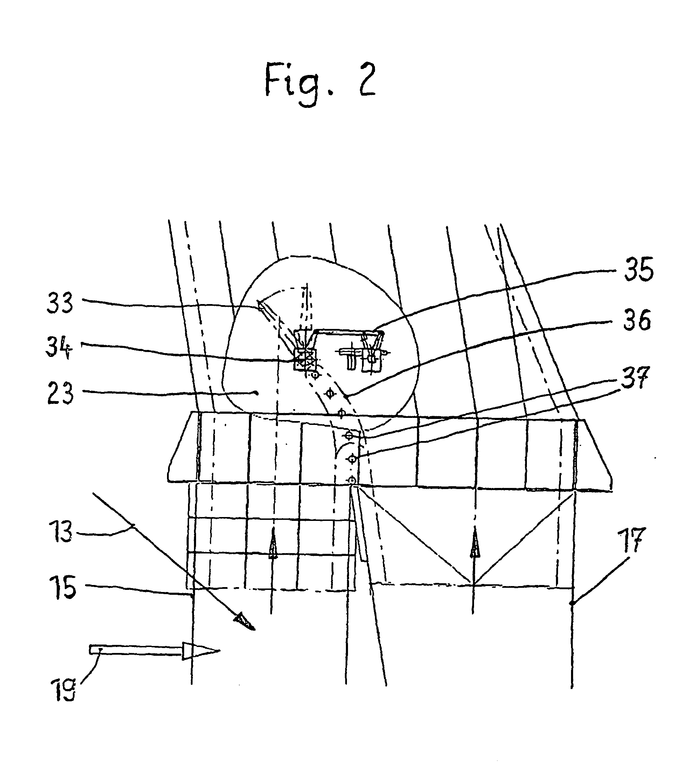

Wie aus der Detailzeichnung Fig. 2 noch hervorgeht, beträgt der maximale Schwenkbereich der Drosselklappe 33 ausgehend von ihrer vertikal nach oben gerichteten Position einen Maximalwinkel von etwa 40°. Die Drosselklappe 33 könnte aber auch in den Tertiärluftkanal 17 hineingeschwenkt werden, um die Tertiärluftmenge zu drosseln und die im Drehofenabgaskanal 15 strömende Ofenabgasmenge ggf. noch weiter zu erhöhen. Das Drosselklappengelenk 34 ist an der vom Abgas angeströmten Klappenunterseite angeordnet. Jedenfalls ist aus der Zeichnung erkennbar, dass selbst bei der sogenannten "geschlossenen" Klappenstellung, bei welcher die Drosselklappe 33 noch einen genügend großen bleibenden freien Strömungsquerschnitt im Drehofenabgaskanal freihält, die laminare Charakteristik der Drehofenabgasströmung und damit die Länge der sich von der DeNOₓ-Brennstelle nach oben fortsetzenden CO-haltigen Wolke 23 und damit auch die möglichst lange Verweilzeit des zu calcinierenden Rohmehls in dieser Reduktionszone erhalten bleiben.

Fig. 2 lässt auch erkennen, dass nach einem weiteren Merkmal der Erfindung die Drosselklappe 33 als von einem Kühlmedium wie z. B. Kühlluft durchströmter plattenförmiger Hohlkörper ausgebildet sein kann. Dabei kann die Zu- und Abfuhr des Kühlmediums durch die Gelenkwelle 34 erfolgen. Zu erkennen ist auch, dass die Drosselklappe 33 bzw. die Gelenkwelle 34 zwecks Verschwenkung bzw. Verdrehung mit einem Stellorgan 35 in Verbindung steht. Im Zwickelbereich an der Nahtstelle zwischen der Drehofenabgassteigleitung 15 und der einmündenden Tertiärluftleitung 17 kann zunächst eine sich nach oben erstreckende beide Leitungen trennende feuerfeste Ausmauerung 36 eingebaut sein, die mit Vorteil mit ihrem oberen Ende etwas in den Drehofenabgaskanal 15 hineingeneigt ist, wobei dann an der Oberseite der Ausmauerung 36 die sich nach oben erstreckende Drosselklappe 33 angelenkt ist. Zu ihrer Armierung kann die feuerfeste Ausmauerung 36 noch voneinander beabstandete Kanäle 37 aufweisen, die zwecks Standzeitverlängerung der Ausmauerung 36 ebenfalls von einem Kühlmedium durchströmt sein können.

## Patentansprüche

1. Anlage zur thermischen Behandlung von mehlförmigen Rohmaterialien, insbesondere bei der Herstellung von Zementklinker aus Rohmehl, das in wenigstens einem vom Abgas eines Drehrohrofens (16) durchströmten Wärmetauscherstrang insbesondere Zyklonschwebegaswärmetauschersystem vorerhitzt, in einer Vorcalcinationsstufe calciniert und in der Sinterzone des Drehrohrofens (16) zu Zementklinker gebrannt wird, der in einem nachgeschalteten Kühler gekühlt wird, wobei in der mit Brennstoff versorgten Vorcalcinationsstufe der Abgasstrom des Drehrohrofens und ein Abluftstrom (Tertiärluft) des Klinkerkühlers getrennt oder gemeinsam in der Weise zur Vorcalcination des Rohmehls genutzt werden, dass im Drehofenabgaskanal (15) wenigstens eine DeNOₓ-Brennstelle (19) mit unterstöchiometrischer Brennstoffverbrennung zwecks Bildung einer CO-haltigen Reduktionszone (23) angeordnet ist, zu deren Restausbrand strömungsabwärts gesehen wenigstens ein Tertiärluftteilstrom in den Drehofenabgaskanal (15) eingeführt ist,
**gekennzeichnet durch** folgende Merkmale:
a) in der Vorcalcinationsstufe ist im Drehofenabgaskanal (15) oberhalb der wenigstens einen DeNOₓ-Brennstelle (19) und oberhalb des Rohmehleintrages (13) vor Einmündung des Tertiärluftteilstroms eine die Drehofenabgasmenge und damit den O₂-Gehalt im Ofenabgas regelnde schwenkbare Drosselklappe (33) eingebaut,
b) die Drosselklappe (33) liegt mit ihrem Schwenkbereich in Abgasströmungsrichtung, d. h. das Drosselklappengelenk (34) ist an der vom Abgas angeströmten Klappenunterseite angeordnet, so dass die laminare Charakteristik der Drehofenabgasströmung bei allen Schwenkstellungen der Drosselklappe (33) erhalten bleibt,

2. Anlage nach Anspruch 1,
**dadurch gekennzeichnet, dass** die Drosselklappe (33) als kühlmediumdurchströmter Hohlkörper ausgebildet ist.

3. Anlage nach Anspruch 1,
**dadurch gekennzeichnet, dass** die Drosselklappe (33) im Zwickelbereich an der Nahtstelle zwischen dem Drehofenabgaskanal (15) und der einmündenden Tertiärluftleitung (17) angeordnet ist.

4. Anlage nach Anspruch 3,
**dadurch gekennzeichnet, dass** im Zwickelbereich an der Nahtstelle zwischen der Drehofenabgassteigleitung (15) und der einmündenden Tertiärluftleitung (17) zunächst eine sich nach oben erstreckende beide Leitungen trennende feuerfeste Ausmauerung (36) eingebaut ist, an deren Oberseite die sich nach oben erstreckende und die feste Ausmauerung nach oben verlängernde schwenkbare Drosselklappe (33) angelenkt ist.

5. Anlage nach einem der Ansprüche 1 bis 4,
**dadurch gekennzeichnet, dass** die Drosselklappe (33) mit einem Stellorgan (35) in Verbindung steht, das bei steigendem O₂-Gehalt im Drehofenabgas durch Regeleingriff die Drosselklappe (33) in eine den Drehofenabgasstrom stärker drosselnde Schwenkstellung bringt, und umgekehrt.

## Claims

1. Installation for the heat treatment of raw materials in meal form, in particular in the production of cement clinker from raw meal, which is preheated in at least one heat exchanger section through which the exhaust gas from a rotary tubular kiln (16) flows, in particular a cyclone suspension heat exchanger system, is calcined in a preliminary calcining stage and is fired in the sintering zone of the rotary tubular kiln (16) to form cement clinker, which is cooled in a downstream cooler, the exhaust gas stream from the rotary tubular kiln and a waste air stream (tertiary air) from the clinker cooler being used, separately or together, in the preliminary calcining stage supplied with fuel in order to pre-calcine the raw meal, in such a manner that at least one DeNOₓ combustion location (19) is arranged in the rotary kiln off-gas duct (15) with substoichiometric fuel combustion in order to form a CO-containing reduction zone (23), for the residual burn-up of which at least one tertiary air partial stream is introduced into the rotary kiln off-gas duct (15) in the downstream direction, **characterized by** the following features:
a) in the preliminary calcining stage a pivotable throttle flap (33), which controls the rotary kiln off-gas quantity and thereby the O₂ content in the kiln off-gas, is installed in the rotary kiln off-gas duct (15) above the at least one DeNOₓ combustion location (19) and above the raw meal introduction (13) upstream of where the tertiary air part stream opens out,
b) the pivot region of the throttle flap (33) in the off-gas direction of flow, i.e. the throttle flap articulation (34), is arranged at the flap underside, which faces the flow of off-gas, so that the laminar characteristic of the rotary kiln off-gas flow is retained in all pivot positions of the throttle flap (33).

2. Installation according to Claim 1, **characterized in that** the throttle flap (33) is designed as a hollow body through which the cooling medium flows.

3. Installation according to Claim 1, **characterized in that** the throttle flap (33) is arranged in the pocket region at the seam location between the rotary kiln off-gas duct (15) and the opening out of the tertiary air line (17).

4. Installation according to Claim 3, **characterized in that**, in the pocket region at the seam location between the rotary kiln off-gas riser (15) and the opening out of the tertiary air line (17), first of all a refractory lining (36) is installed, which lining separates the two lines, extends upwards and has articulatedly mounted on its top side the upwardly extending, pivotable throttle flap (33), which extends the fixed lining in the upward direction.

5. Installation according to one of Claims 1 to 4, **characterized in that** the throttle flap (33) is connected to an actuating member (35) which, as the O₂ content in the rotary kiln off-gas rises, by means of a control intervention moves the throttle flap (33) into a pivoted position which throttles the flow of rotary kiln off-gas to a greater extent, and vice versa.

## Revendications

1. Installation de traitement thermique de matériaux farineux bruts, notamment lors de la fabrication de briques en ciment à partir de farine crue, qui est préchauffée dans au moins une ligne à échangeur de chaleur, notamment un système d'échangeur de chaleur à gaz tourbillonnant en suspension, traversée par le gaz d'échappement d'un four tubulaire tournant (16), calcinée dans une phase de précalcination et brûlée dans la zone de frittage du four tubulaire tournant (16) pour former une brique en ciment qui est refroidie dans un refroidisseur installé en aval, le flux de gaz d'échappement du four tubulaire tournant et un courant d'air d'échappement (air tertiaire) du refroidisseur de briques étant, dans la phase de précalcination alimentée en combustible, utilisés pour la précalcination de la farine crue séparément ou ensemble de manière à ce que soit disposé, dans le canal de gaz d'échappement du four tournant (15), au moins un point de combustion de DeNOₓ (19) à combustion sous-stoechiométrique de combustible dans le but de former une zone de réduction (23) contenant du CO et, pour son brûlage résiduel, vu dans le sens descendant du flux, au moins un courant d'air tertiaire partiel étant introduit dans le canal de gaz d'échappement du four tournant (15),
**caractérisée par les caractéristiques suivantes :**
a) dans la phase de précalcination, on monte, dans le canal de gaz d'échappement du four tournant (15), au-dessus de l'au moins un point de combustion de DeNOₓ (19) et au-dessus de l'entrée de farine crue (13), avant l'embouchure du courant d'air tertiaire partiel, un clapet d'étranglement (33) pivotable régulant la quantité de gaz d'échappement du four tournant et donc la quantité de O₂ contenue dans le gaz d'échappement du four,
b) le clapet d'étranglement (33) est placé avec sa zone de pivotement dans le sens de flux du gaz d'échappement, c'est-à-dire que l'articulation du clapet d'étranglement (34) est disposée sur la face inférieure du clapet où afflue le gaz d'échappement, de sorte que la caractéristique laminaire du flux de gaz d'échappement du four tournant reste inchangée dans toutes les positions de pivotement du clapet d'étranglement (33).

2. Installation selon la revendication 1, **caractérisée en ce que** le clapet d'étranglement (33) est réalisé sous forme d'un corps creux traversé par un fluide de refroidissement.

3. Installation selon la revendication 1, **caractérisée en ce que** le clapet d'étranglement (33) est disposé dans la zone de soufflet au point de jointure entre le canal de gaz d'échappement du four tournant (15) et la conduite d'air tertiaire (17) débouchant.

4. Installation selon la revendication 3, **caractérisée en ce que,** dans la zone de soufflet, au point de jointure entre la conduite ascendante de gaz d'échappement du four tournant (15) et la conduite d'air tertiaire (17) débouchant, on monte d'abord une maçonnerie ignifugée (36) s'étendant vers le haut et séparant les deux conduites, à la face supérieure de laquelle s'articule le clapet d'étranglement (33) pivotable s'étendant vers le haut et prolongeant vers le haut la maçonnerie fixe.

5. Installation selon l'une quelconque des revendications 1 à 4, **caractérisée en ce que** le clapet d'étranglement (33) est en liaison avec un organe de réglage (35) qui, lorsque la quantité d'O₂ contenue dans le gaz d'échappement du four tournant augmente, amène par intervention de réglage le clapet d'étranglement (33) dans une position de pivotement étranglant plus fortement le courant de gaz d'échappement du four tournant et inversement.
